# EUROPEAN PATENT SPECIFICATION

(11) **EP 3 277 565 B1**
(45) Date of publication and mention of the grant of the patent: **29.01.2020**
(21) Application number: 15887934.6
(22) Date of filing: 03.04.2015
(51) Int. Cl.: B62J 15/00, B62J 13/02

(54) **INNER REAR FENDER STRUCTURE FOR A MOTORCYCLE**
INNERE HINTERE KOTFLÜGELSTRUKTUR FÜR EIN MOTORRAD
STRUCTURE DE GARDE-BOUE ARRIÈRE INTERNE POUR UNE MOTOCYCLETTE

(43) Date of publication of application: 07.02.2018
(73) Proprietor: Honda Motor Co., Ltd., Tokyo 107-8556 (JP)
(72) Inventor: KWAMCHOB, Suriya, Bangkok 10520 (TH); HARNSOPAWANAKUL, Thanadon, Bangkok 10520 (TH)
(74) Representative: Piésold, Alexander James
(86) International application number: PCT/TH2015/000023
(87) International publication number: WO 2016/159895

(56) References cited:
- EP-A2- 2 433 855
- CN-A- 102 941 896
- JP-A- S6 382 894
- JP-A- H04 221 285
- JP-A- 2002 302 081
- JP-A- 2006 327 483
- JP-A- 2013 103 559
- JP-A- 2013 199 137
- JP-A- 2013 244 883
- JP-A- 2015 123 764
- US-A1- 2010 096 825

## Description

### FIELD OF INVENTION

The present invention discloses an inner rear fender structure for a motorcycle.

### BACKGROUND OF THE INVENTION

As shown in Japanese patent no. JP5415733, the prior art inner rear fender is attached to the swing arm at the front portion of the rear tire. The prior art inner fender structure discloses the side surface 22 and upper surface 25 for covering a front small part of the rear tire because the thick side surface of the swing arm covers the rear tire, it is not necessary for the inner rear fender to widely cover a front portion of the rear tire. However, in small motorcycles, small height swing arms are enough because of their small power engine and such swing arm doesn't cover a wide area of the rear tire. Therefore, recently a suitable and good appearance inner rear fender for small motorcycle is desirable.

JP H04 221285 A discloses a rear fender mounting construction for a motorcycle according to the preamble of claim 1.

### SUMMARY OF THE INVENTION

The present invention aims to provide an alternative inner rear fender structure for a motorcycle which takes shape of a swing arm as if it is part of a swing arm and has an inner rear fender integrated together and make sure such combined designs are impressive to Customers by forming a groove to separate both design images.

According to the invention, there is provided an inner rear fender structure for a motorcycle comprising: a swing arm supported by a pivot mounted to a body frame, and a rear tire supported by said swing arm at the rear end of the motorcycle and, an inner rear fender mounted to said swing arm covering a front portion of said rear tire, wherein said inner rear fender structure comprises a swing arm shape portion designed to take a shape of said swing arm as if it forms part of said swing arm; and an inner rear fender portion mounted close to outer surface of the front portion of said rear tire; characterised in that said inner rear fender structure comprises: a groove portion disposed between said swing arm shape portion and said inner rear fender portion, a ridge structure extending from said groove portion to the rear end of said inner rear fender portion, wherein said ridge structure comprises a pair of ridges formed symmetrically in a side direction and on the upper surface of said inner fender portion, and a protrusion formed between said pair of ridges and extending rearward from said swing arm shape portion, wherein said groove portion is formed in the same outline as the protrusion.

Due to the formation of a groove between the swing arm shape portion and the inner rear fender portion, it enables for both portions to be recognized clearly and separately. Thus, the swing arm portion gives a sporty appearance of the rear structure in small motorcycles similar to that of big motorcycles. Even though small motorcycles do not have thick and bulky swing arms, with this arrangement, it is possible for small engine motorcycles to have a better looking inner rear fender and a bigger swing arm.

In an embodiment as disclosed in claim 2, the left side face of the swing arm shape portion integrally forms a chain case configured to cover the drive chain. Accordingly with this design, an additional part to cover the drive chain will not be required and thus there is a saving in the manufacturing cost of the additional part.

In an embodiment as disclosed in claim 3, the left and right face of the swing arm shape portion conceals the mounting of the rear suspension by the recessed portion. In this arrangement, it can be seen that the appearance around the rear suspension is better and improves the sporty image to the motorcycle.

The inner fender structure comprises a ridge structure extending from the groove portion to the rear end of said inner fender portion. This enables the inner rear fender to have improved stiffness. As a pair of ridges are formed symmetrically, in parallel at each side on the upper surface of said inner fender portion, this provides better stiffness and balance and a closer clearance between the fender and rear tire. That causes keeping of the sealing performance around the rear tire.

In an embodiment as disclosed in claim 4, the groove is formed at the front end of the pair of ridges and the outline of said protrusion in top view resembles a zigzag. This may create a unique and impressive zigzag design to customers. Further, the groove and zigzag shape is useful for dissemble and attach new inner fender when customers desire.

### BRIEF DESCRIPTION OF DRAWINGS

The principle of the present invention and its advantages will become apparent in the following description taking in consideration with the accompanying drawings in which:
FIG. 1 shows a left view of the total unit of a motorcycle with the left side of the inner rear fender structure according to the principle of the present invention;
FIG. 2 shows a right view of the total unit of a motorcycle with the right side of the inner rear fender structure according to the principle of the present invention;
FIG. 3 shows a left view of a rear unit of a motorcycle with the left view of the inner rear fender structure according to the principle of the present invention;
FIG. 4 shows a right view of a rear unit of a motorcycle with the right view of the inner rear fender structure according to the principle of the present invention;
FIG. 5 shows a left view of the inner rear fender structure of the present invention;
FIG. 6 shows a right view of the inner rear fender structure of the present invention;
FIG. 7 shows a cross-sectional view of the inner rear fender structure showing a groove of the present invention;
FIG. 8 shows a front view of the inner rear fender structure of the present invention;
FIG. 9 shows a top view of the X-axis of the inner rear fender structure of structure of the present invention;

### DETAILED DESCTIPTION OF EMBODIMENTS OF THE INVENTION

The present invention discloses an inner rear fender structure 14 for a small motorcycle 100 including a swing arm 250 which is supported by a pivot 230 formed in a body frame 30 and the inner rear fender structure 14 is mounted to the swing arm 250 covering the front portion of the rear tire 164 attaching the rear wheel 165. The inner rear fender 162 is integrally formed from a swing arm shape portion 15 and an inner rear fender portion 16 which are separated by at least one groove 18.

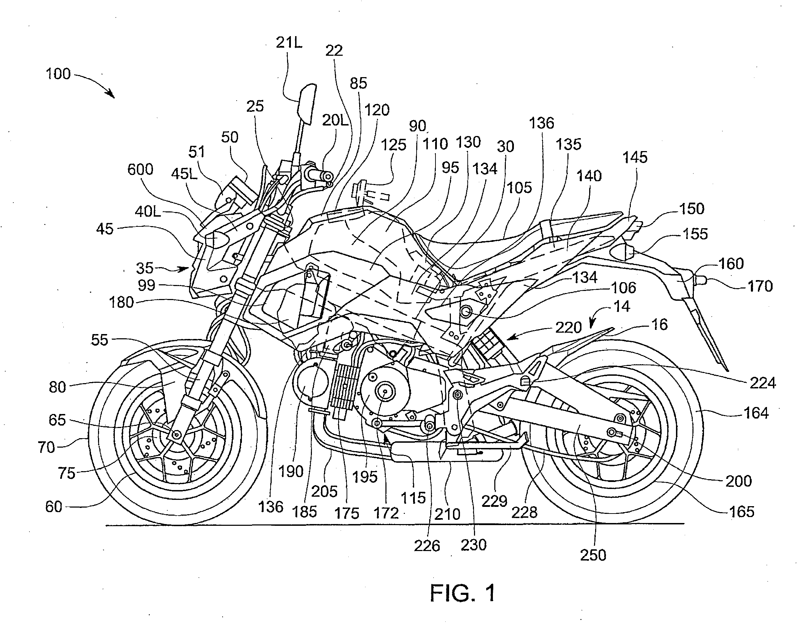

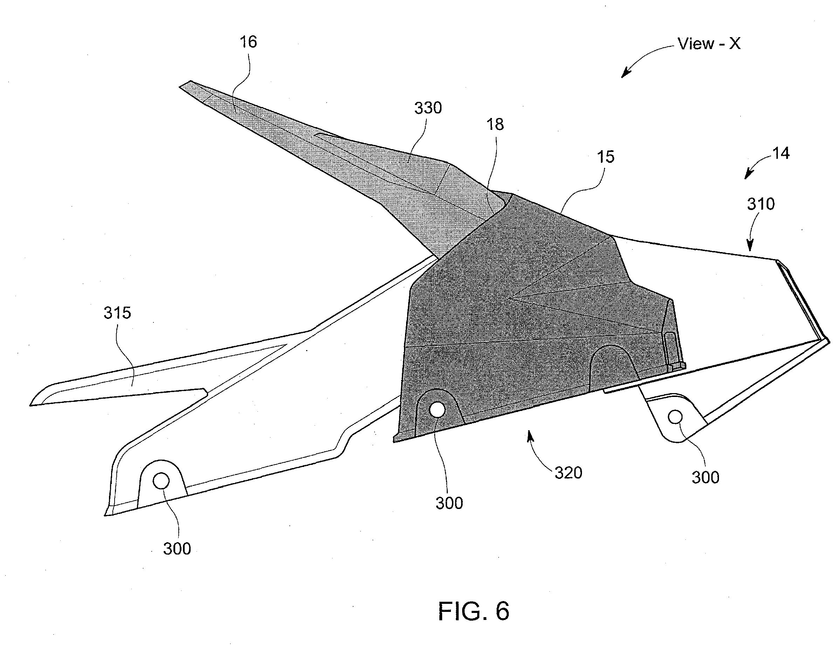

FIGs. 1-9 show the inner rear fender structure 14, according to the principle of the present invention.

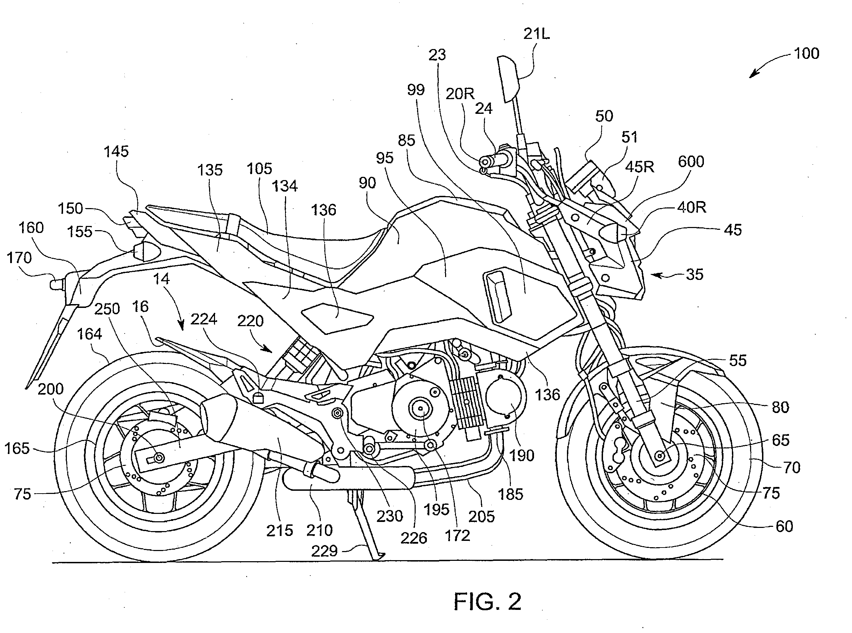

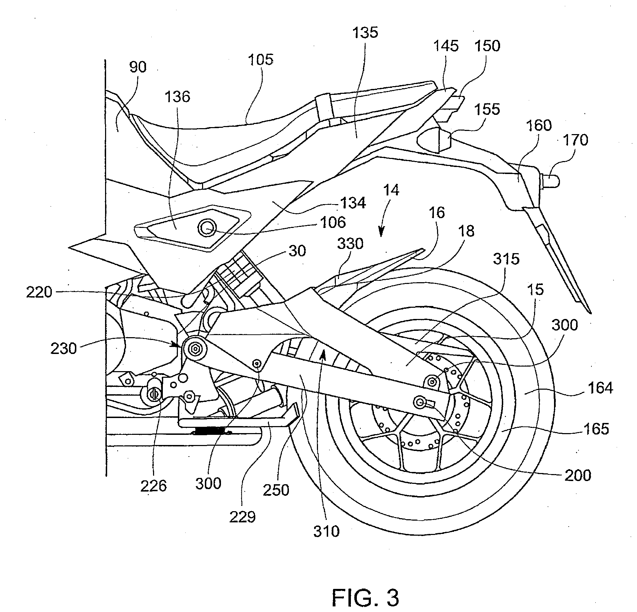

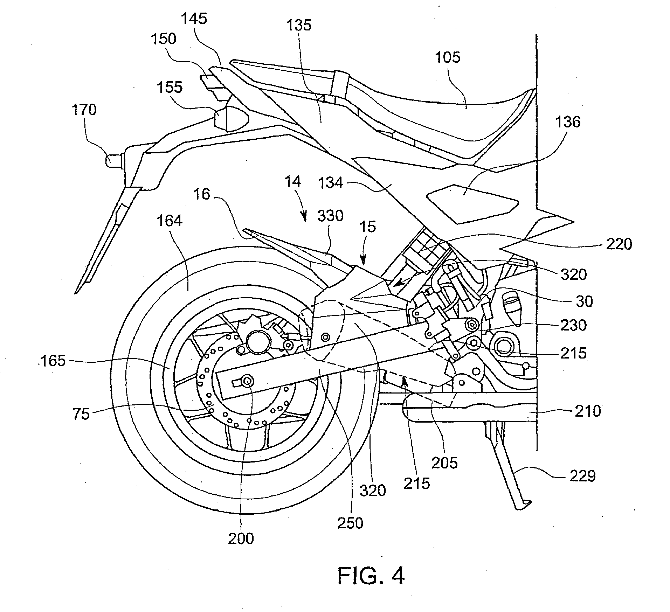

In more detail, FIGs. 1 and 3 show a left side view of a motorcycle 100 comprising an embodiment of a left side view of the inner rear fender structure 14 according to the principle of the present invention. FIGs 2 and 4 show a right side view of a motorcycle 100 comprising an embodiment of a right side view of the inner rear fender structure 14 according to the principle invention. In this exemplary example, the inner rear fender structure 14 is assembled to a rear end of a motorcycle 100, more specifically at the front and above of a rear tire 164.

The motorcycle 100 constitutes a pair of handle grips 20 L,R steerably connecting to a pair of front forks 55L,R mounted on a body frame 30 extending in a rearward direction of a motorcycle body. Adjacent to a pair of handle grips 20L,R, a pair of rear view mirrors 21L,R are mounted. Also at the front of the left handle grip 20L, a clutch lever 22 is designed, whereas at the front of the right handle grip 20R, a rear brake lever 23 is designed and a throttle 24 are coupled on the right handle grip 20R.

A headlight 35 is covered with a head light cover 600 and a pair of headlight side covers 45L,R where a pair of winker lights 40 are mounted to a front section of the motorcycle 100 below a meter 50 having a meter cover 51 affixed thereto.

The body frame 30 supports a pair of front forks 55L,R to enable steer a front wheel 60 at a front axle 65; the front wheel 60 is equipped with a front tire 70 and a disk brake rotor 75 at right side of the front tire to allow controlling rotation of the front wheel 60. The front wheel 60 is small size same as a rear wheel 165, 10-12 inches which means small motorcycle; a front fender 80 designed to block dirt or debris picking up by the rotation of the front wheel 60 is positioned above the front wheel 60 and between the pair of the front forks 55L,R. The body frame 30 supports a fuel tank 110 which stores and supplies fuel to an engine system 115 hanged at a lower portion of the mid- section of the body frame 30; the fuel tank 110, which is located toward the front of the vehicle between the headlight 35 and a seat 105 of which supported on a seat frame 140, includes a fuel receiving inlet 120 for receiving fuel, a fuel lid 125, and a fuel pump 130 installed into the fuel tank 110.

The motorcycle 100 is covered by a combination of body covers that provide cover for the internal structures and elements of the motorcycle 100, including a center cover 85 that covering upper portions of fuel tank 110 and fuel inlet 120, a pair of side upper covers 90, a pair of side covers 95 of which may optionally include a pair of garnishes 99, a pair of side lower covers 136, a pair of side rear cover 134 and a pair of side rear upper covers 135. A seat key cylinder 106 is installed on the left side lower cover 136 surrounded by left side rear cover 134 as to provide access to an underside of the seat 105.

Continuous with the seat frame 140 are a rear grip 145 of which provide grips for a passenger, a tail light 150 and a pair of rear winker lights 155, a rear fender 160 suspended above a rear tire 164 and a license light 170 disposed on the rear fender 160. The rear fender 160 is designed to block dirt and debris picking up by the rear wheel 165 from travelling further or spray onto the rider or the passenger. Inner rear fender portion 16 will also supplementary provide the same affects.

The engine system 115 being 4 stroke type and under 200 cc capacity as small engine includes an cylinder bloc 175 connecting to a cylinder head 190 which is connected to an engine intake system with an air cleaner 180 which supplies filtered air to a throttle body 185 which includes an injector and throttle valves, a crank case 195 supports the cylinder bloc 175 in manner for inclining the axis of cylinder bloc forwardly, similar to horizontal. This horizontal engine layout is so suitable for small motorcycle because of small wheel size. The engine system 115 generates drive force which is delivered to the rear wheel 165 by a drive chain 228. Exhaust from the cylinder head 190 is directed to an exhaust system into an exhaust pipe 205 leading to an exhaust chamber 210 and subsequently to a muffler 215 directing toward the rear of the motorcycle 100.

As generally known in the art, the suspension components of a motorcycle 100 comprise of front forks 55L, R on the front of the motorcycle 100 and a rear cushion unit 220 on the rear of the motorcycle 100 to absorb road conditions and provides a comfortable ride. The swing arm 250 on the rear of the motorcycle 100 is function as a base for mounting of a rear axle 200 and assembly of the rear wheel 165, having the rear tire 164 assembled thereto, at the rear axle 200. The rear wheel 165 is pulled by the drive chain 228. A pair of passenger steps 224 and a pair of rider steps 226 are also provided for comfort of the rider and the passenger respectively are disposed behind the engine system 115. A side stand 229 is provided on the left side of the motorcycle 100 to support the motorcycle 100 when parked.

In an embodiment as shown in FIGs 3 and 4, the inner rear fender structure 14 is located at the rear unit of the motorcycle 100 mounted to the swing arm 250 at the front portion of the rear tire 164. The swing arm 250 is supported by the pivot 230 that is mounted to the body frame 30. The inner fender structure 14 is mounted to the swing arm 250 by a plurality of mounting means 300 disposed at the swing arm shape portion 15 of the inner rear fender structure 14. The swing arm shape portion 15 has a left face 310 and a right face 320 which these two faces has different designs. Looking in detail of FIG. 3, the left face 310 of the swing arm shape portion 15 has a chain case cover 315 integrally formed with the swing arm shape portion 15. There is no addition part required to cover the drive chain 228 which engages a driven sprocket (not shown) attached to the rear wheel 165. An inner fender portion 16 is extended from the swing arm shape portion 15 to rearward and located at the center of the swing arm shape portion 15 and upper front of the rear tire 164 for blocking water or mud from reaching the rear unit of the motorcycle 100. FIG. 4 shows the right rear side view of motorcycle with removal of the muffler 215, wherein a right face 320 of the swing arm shape portion 15 covering and accommodating the rear cushion unit 220 and thus concealing the mounting of the rear cushion unit 220 to the swing arm 250. This is to provide a better appearance as if the rear cushion unit 220 is connected to the swing arm shape portion 15 similar to than in big motorcycles.

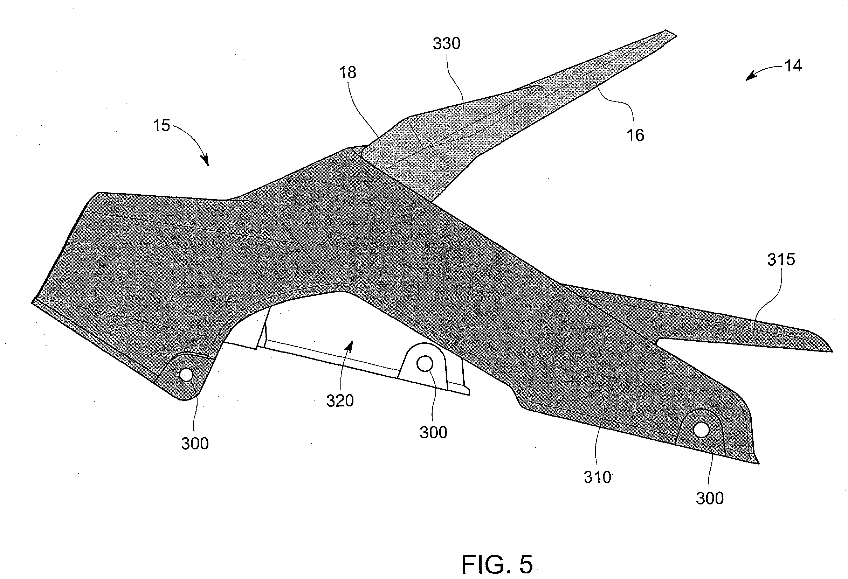

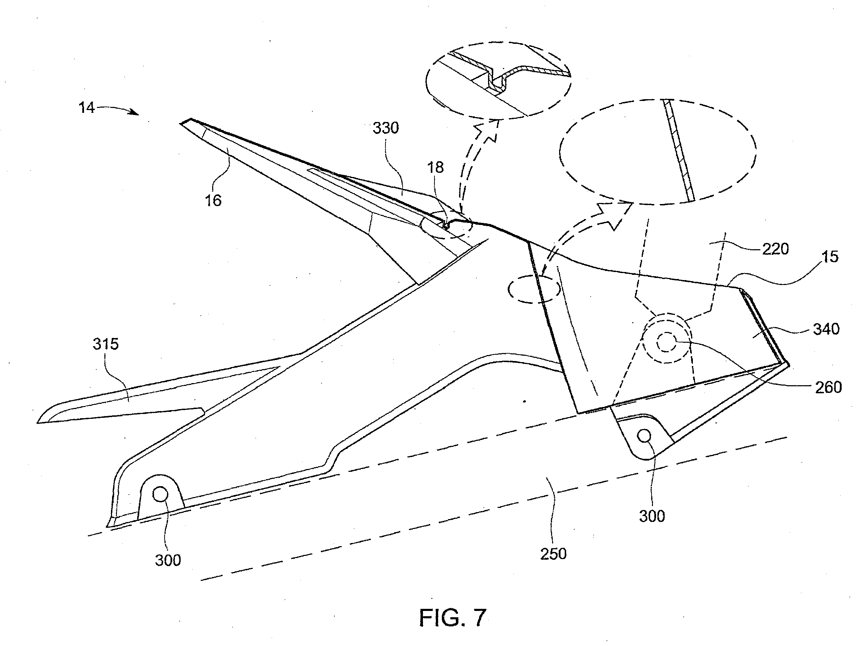

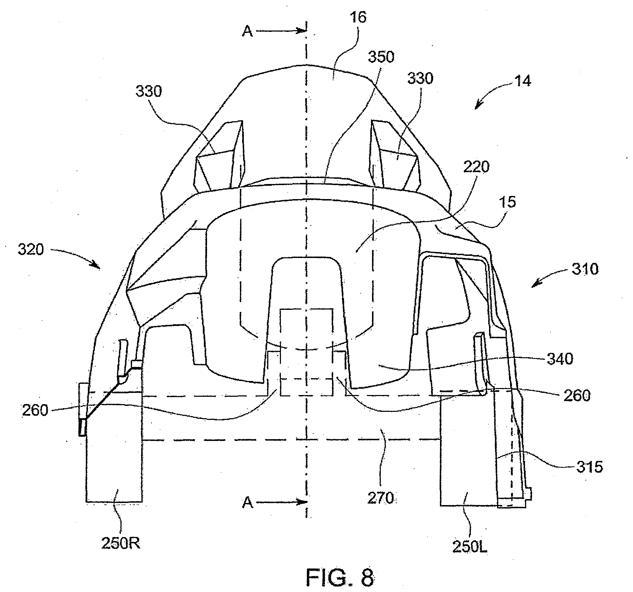

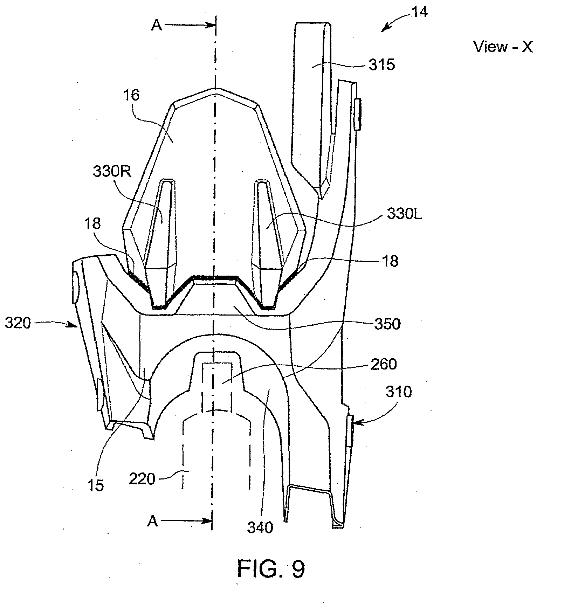

FIGs 5-7 shows the inner rear fender structure 14 left view, right view, and cross-sectional front view, respectively. A plurality of mounting means 300 are prepared on the swing arm shape portion 15 which are configured to mount the inner rear fender structure 14 to the swing arm 250 of the motorcycle 100. The swing arm shape portion 15 and the inner fender portion 16 are integrally formed and can be distinguished from each other by at a groove 18 as shown in the FIG. 7 (cross section) and FIG.9 (top view). This would create a sporty appearance of the motorcycle 100. On the upper part of the inner rear fender structure 14 further comprises a ridged structure 330 which extends from the groove 18 to the rear end of the inner rear fender portion 16. The ridge structure 330 provides and supports strength and stiffness to the inner rear fender portion 16. As shown in FIGs 8-9, the ridge structure 330 provides a pair of ridges 330L,R being located at the inner rear fender portion 16 of the inner rear fender structure 14. The pair of ridges 330L,R are formed symmetrically in side direction on the inner rear fender portion 16. When looking at the top view of the inner rear fender structure 14, the recessed portion 340 of the swing arm shape portion 15 can be clearly seen. The recessed portion 340 is concaved to cover and accommodate the rear cushion unit 220. This would create a better and sporty appearance that the rear cushion unit is connected to the inner rear fender structure 14.

In the embodiment as shown in FIG. 9, as the viewing aspect of the inner rear fender structure 14 in view "X", a protrusion 350 disposed on the swing arm shape portion 15. The protrusion 350 extends rearward between the pair of ridges 330L,R. The groove 18 is formed in same outline of the protrusion 350 and extended to the front part of the pair of ridges 330L,R which may create a zigzag or other designs. In addition, FIG. 9 clearly shows the presence of the chain case cover 315 located at the left face 310 of the swing arm shape portion 15.

As it is apparent from the above teaching, by providing alternative inner rear fender structure according to the principle of the present invention and its various embodiments, it is possible for a small motorcycle to have a swing arm structure similar to that in big motorcycles.

Although specific embodiments of the invention have been disclosed and described as well as illustrated in the accompanying drawings, it is simply for the purpose of better understanding of the principle of the present invention and it is not as a limitation of the scope of the present invention. Adaption and modification to various structures such as design or material of the invention, mounting mechanism of various parts and elements or embodiments are possible and apparent to a skilled person without departing from the scope of the present invention which is to be determined by the claims.

### List of reference:

- 14: inner rear fender structure
- 15: swing arm shape portion
- 16: inner fender portion
- 18: groove of the inner rear fender structure
- 20L: left handles
- 20R: right handles
- 21L: left rear view mirrors
- 21R: right rear view mirrors
- 22: clutch lever
- 23: rear brake lever
- 24: throttle grip
- 30: body frame
- 35: head light
- 40L: left front winker light
- 40R: right front winker light
- 45L: left headlight side covers
- 45R: right headlight side covers
- 50: meter
- 51: meter cover
- 55L: left front forks
- 55R: right front forks
- 60: front wheel
- 65: front axle
- 70: front tire
- 75: disk brake
- 80: front fender
- 85: center cover
- 90: pair of side upper covers
- 95: pair of side covers
- 99: pair of garnishes
- 100: motorcycle
- 105: seat
- 106: seat key cylinder
- 110: fuel tank
- 115: engine system
- 120: fuel receiving inlet
- 125: fuel lid
- 130: fuel pump
- 134: pair of side rear cover
- 135: pair of side rear upper cover
- 136: pair of side lower covers
- 140: seat frame
- 145: rear grip
- 150: tail light
- 155: pair of rear winker lights
- 160: rear fender
- 162: inner rear fender
- 164: rear tire
- 165: rear wheel
- 170: license plate light
- 172: crank shaft
- 175: cylinder bloc
- 180: air cleaner
- 185: throttle assembly
- 190: cylinder head
- 195: crank case
- 200: rear axle
- 205: exhaust pipe
- 210: exhaust chamber
- 215: muffler
- 220: rear cushion unit
- 224: passenger steps
- 226: rider steps
- 228: drive chain
- 229: side stand
- 230: pivot
- 250: swing arm
- 300: mounting means
- 310: left face of the swing arm shape portion
- 315: chain case cover
- 320: right face of the swing arm shape portion
- 330: ridge structure
- 340: recessed portion
- 350: protrusion from the swing arm shape portion
- 600: headlight cover

## Claims

1. An inner rear fender structure (14) for a motorcycle (100) comprising:
a swing arm (250) supported by a pivot (230) mounted to a body frame (30), and a rear tire (164) supported by said swing arm (250) at the rear end of the motorcycle (100) and, an inner rear fender (162) mounted to said swing arm (250) covering a front portion of said rear tire (164), wherein
said inner rear fender structure (14) comprises
a swing arm shape portion (15) designed to take a shape of said swing arm (250) as if it forms part of said swing arm (250); and
an inner rear fender portion (16) mounted close to outer surface of the front portion of said rear tire (164);
**characterised in that** said inner rear fender structure (14) comprises:
a groove portion (18) disposed between said swing arm shape portion (15) and said inner rear fender portion (16),
a ridge structure (330) extending from said groove portion (18) to the rear end of said inner rear fender portion (16), wherein said ridge structure (330) comprises a pair of ridges (330L, R) formed symmetrically in a side direction and on the upper surface of said inner rear fender portion (16), and
a protrusion (350) formed between said pair of ridges (330L,R) and extending rearward from said swing arm shape portion (15),
wherein said groove portion (18) is formed in the same outline as the protrusion (350).

2. The inner rear fender structure (14) of claim 1, wherein said swing arm shape portion (15) comprises a left face (310) and a right face (320), and said left face (310) includes a chain case cover (315) configured to cover a drive chain (228) integrally formed to said left face (310).

3. The inner rear fender structure (14) of claim 2, wherein said inner fender structure (14) further comprises
a cushion unit (220) for absorbing the vibration from said rear tire (164) is mounted between said swing arm (250) and said body frame (30) at the front upper portion of said swing arm (250);
said swing arm shape portion (15) having a recessed portion (340) configured to cover and accommodate said cushion unit (220) and,
said left face (310) and said right face (320) of said swing arm shape portion (15) conceal a mounting of said cushion unit (220) to said swing arm (250) in a side view.

4. The inner rear fender structure (14) of claim 1, wherein said groove (18) is formed at the front end of said pair of ridges (330L,R) and the outline of said protrusion (350) in top view resembles a zigzag.

## Patentansprüche

1. Innere hintere Kotflügelstruktur (14) für ein Motorrad (100), umfassend:
eine Schwinge (250), welche von einem Drehgelenk (230) abgestützt wird, welches an einem Karosserierahmen (30) befestigt ist, und einen Hinterreifen (164), der von der Schwinge (250) am hinteren Ende des Motorrads (100) abgestützt wird, und einen inneren hinteren Kotflügel (162), welcher an der Schwinge (250) befestigt ist und einen vorderen Abschnitt des Hinterreifens (164) abdeckt, wobei
die innere hintere Kotflügelstruktur (14) umfasst
einen Schwingenformabschnitt (15), der dazu vorgesehen ist, eine Form der Schwinge (250) anzunehmen, als ob er einen Teil der Schwinge (250) bildet; und
einen inneren hinteren Kotflügelabschnitt (16), der nahe einer Außenfläche des vorderen Abschnitts des Hinterreifens (164) befestigt ist;
**dadurch gekennzeichnet, dass** die innere hintere Kotflügelstruktur (14) umfasst:
einen Nutabschnitt (18), der zwischen dem Schwingenformabschnitt (15) und dem inneren hinteren Kotflügelabschnitt (16) angeordnet ist,
eine Rippenstruktur (330), die sich vom Nutabschnitt (18) bis zum hinteren Ende des inneren hinteren Kotflügelabschnitts (16) erstreckt, wobei die Rippenstruktur (330) ein Paar Rippen (330L, R) umfasst, die symmetrisch in einer Seitenrichtung und auf der oberen Oberfläche des inneren hinteren Kotflügelabschnitts (16) ausgebildet sind, und
einen Vorsprung (350), der zwischen dem Paar Rippen (330L,R) ausgebildet ist und sich von dem Schwingenformabschnitt (15) nach hinten erstreckt,
wobei der Nutabschnitt (18) mit der gleichen Kontur wie der Vorsprung (350) ausgebildet ist.

2. Innere hintere Kotflügelstruktur (14) nach Anspruch 1, wobei der Schwingenformabschnitt (15) eine linke Fläche (310) und eine rechte Fläche (320) umfasst, und die linke Fläche (310) eine Kettengehäuseabdeckung (315) beinhaltet, die zum Abdecken einer Antriebskette (228) konfiguriert ist, welche integral mit der linken Fläche (310) ausgebildet ist.

3. Innere hintere Kotflügelstruktur (14) nach Anspruch 2, wobei die innere Kotflügelstruktur (14) weiter umfasst
eine Dämpfereinheit (220) zum Absorbieren der Vibration von dem Hinterreifen (164) die zwischen der Schwinge (250) und dem Karosserierahmen (30) am vorderen oberen Abschnitt der Schwinge (250) befestigt ist;
wobei der Schwingenformabschnitt (15) einen vertieften Abschnitt (340) aufweist, der zum Abdecken und Aufnehmen der Dämpfereinheit (220) konfiguriert ist, und
wobei die linke Fläche (310) und die rechte Fläche (320) des Schwingenformabschnitts (15) eine Befestigung der Dämpfereinheit (220) an der Schwinge (250) in einer Seitenansicht verdecken.

4. Innere hintere Kotflügelstruktur (14) nach Anspruch 1, wobei die Nut (18) am vorderen Ende des Paares Rippen (330L,R) ausgebildet ist und die Kontur des Vorsprungs (350) in Draufsicht einem Zickzack ähnelt.

## Revendications

1. Structure de garde-boue arrière interne (14) pour une motocyclette (100) comprenant :
un bras oscillant (250) supporté par un pivot (230) monté sur une ossature de carrosserie (30), et un pneu arrière (164) supporté par ledit bras oscillant (250) au niveau de l'extrémité arrière de la motocyclette (100) et un garde-boue arrière interne (162) monté sur ledit bras oscillant (250) recouvrant une partie avant dudit pneu arrière (164), dans laquelle
ladite structure de garde-boue arrière interne (14) comprend
une partie de forme de bras oscillant (15) conçue pour prendre une forme dudit bras oscillant (250) comme si elle faisait partie du bras oscillant (250) ; et
une partie de garde-boue arrière interne (16) montée à proximité d'une surface externe de la partie avant dudit pneu arrière (164) ;
**caractérisée en ce que** ladite structure de garde-boue arrière interne (14) comprend :
une partie de rainure (18) disposée entre ladite partie de forme de bras oscillant (15) et ladite partie de garde-boue arrière interne (16),
une structure de crête (330) s'étendant depuis ladite partie de rainure (18) jusqu'à l'extrémité arrière de ladite partie de garde-boue arrière interne (16), dans laquelle ladite structure de crête (330) comprend une paire de crêtes (330L, R) formées de manière symétrique dans une direction latérale et sur la surface supérieure de ladite partie de garde-boue arrière interne (16), et
une saillie (350) formée entre ladite paire de crêtes (330L, R) et s'étendant vers l'arrière depuis ladite partie de forme de bras oscillant (15),
dans laquelle ladite partie de rainure (18) est formée dans le même profil que la saillie (350).

2. Structure de garde-boue arrière interne (14) selon la revendication 1, dans laquelle ladite partie de forme de bras oscillant (15) comprend une face gauche (310) et une face droite (320) et ladite face gauche (310) inclut un couvercle de carter de chaîne (315) configuré pour recouvrir une chaîne d'entraînement (228) formée d'un seul tenant sur ladite face gauche (310).

3. Structure de garde-boue arrière interne (14) selon la revendication 2, dans laquelle ladite structure de garde-boue interne (14) comprend en outre
une unité de rembourrage (220) pour absorber les vibrations provenant dudit pneu arrière (164) est montée entre ledit bras oscillant (250) et ladite ossature de carrosserie (30) au niveau de la partie supérieure avant dudit bras oscillant (250);
ladite partie de forme de bras oscillant (15) présentant une partie en creux (340) configurée pour recouvrir et recevoir ladite unité de rembourrage (220) et,
ladite face gauche (310) et ladite face droite (320) de ladite partie de forme de bras oscillant (15) cachent un montage de ladite unité de rembourrage (220) sur ledit bras oscillant (250) dans une vue latérale.

4. Structure de garde-boue arrière interne (14) selon la revendication 1, dans laquelle ladite rainure (18) est formée au niveau de l'extrémité avant de ladite paire de crêtes (330L, R) et le profil de ladite saillie (350) dans une vue de dessus ressemble à un zigzag.
